# EUROPEAN PATENT SPECIFICATION

(11) **EP 2 314 941 B1**
(45) Date of publication and mention of the grant of the patent: **23.11.2016**
(21) Application number: 08809235.8
(22) Date of filing: 22.08.2008
(51) Int. Cl.: F24F 12/00, F28D 9/00, F28F 9/007

(54) **HEAT EXCHANGING VENTILATION EQUIPMENT**
WÄRMEAUSTAUSCHLÜFTUNGSEINRICHTUNG
ÉQUIPEMENT DE VENTILATION PAR ÉCHANGE DE CHALEUR

(43) Date of publication of application: 27.04.2011
(73) Proprietor: Mitsubishi Electric Corporation, Tokyo 100-8310 (JP)
(72) Inventor: SUZUKI, Masanobu, Tokyo 100-8310 (JP); MORIKAWA, Masaki, Nakatsugawa-shi Gifu 508-0041 (JP); UEDA, Masahiro, Tokyo 100-8310 (JP)
(74) Representative: Hopkin, Tobias J.B.
(86) International application number: PCT/JP2008/065026
(87) International publication number: WO 2010/021058

(56) References cited:
- EP-A1- 1 134 510
- FR-A1- 2 533 682
- JP-A- 9 072 593
- JP-A- 10 300 158
- JP-A- 2001 263 752
- JP-A- 2004 003 858
- US-A1- 2007 158 049

## Description

### TECHNICAL FIELD

The present invention relates to a heat exchange ventilation apparatus that ventilates while performing exchange of sensible heat or exchange of latent heat by a heat exchanger between outdoor air and indoor air.

### BACKGROUND ART

In the heat exchange ventilation apparatus that ventilates while performing exchange of sensible heat or exchange of latent heat between outdoor air and indoor air, a supply air passage that reaches an indoor-side supply opening from an outdoor-side suction opening via a heat exchanger and an exhaust air passage that reaches an outdoor-side supply opening from an indoor-side suction opening via the heat exchanger are defined in a body casing. In this heat exchange ventilation apparatus, if airflow leakage occurs in the supply air passage and the exhaust air passage, a problem such as lowering of a ventilation efficiency in a heat exchange element occurs, so that a measure for preventing the airflow leakage is taken. US 2007/0158049 discloses an apparatus upon which the preamble of appending claim 1 is based.

For example, Patent Document 1 describes a heat exchange ventilation apparatus in which a heat exchanger is arranged in a central portion in a width direction in a body casing and a pair of partition members is provided at rotationally symmetric positions with the heat exchanger as an axis is provided and an exhaust air passage (exhaust air path) and a supply air passage (supply air path) are defined by the pair of partition members, the heat exchanger, and the body casing. In this heat exchange ventilation apparatus, a sealing member is mounted on a contact surface of each partition member with other members for improving airtightness in each of the exhaust air passage and the supply air passage.

Patent Document 1: Japanese Patent Application Laid-open No. H05-118603

### DISCLOSURE OF INVENTION

### PROBLEM TO BE SOLVED BY THE INVENTION

In the conventional heat exchange ventilation apparatus in which the supply air passage and the exhaust air passage are defined by the body casing and the partition members arranged in the body casing, if twist or deflection occurs in the body casing when arranging the heat exchange ventilation apparatus on a wall or a ceiling of a room, the airflow leakage from an air passage on a high-pressure side to an air passage on a low-pressure side easily occurs. Therefore, occurrence of twist or deflection in the body casing at the time of arrangement is prevented by increasing rigidity of the body casing by a method such as increasing the thickness of the body casing. However, increase in rigidity of the body casing leads to a cost increase of the heat exchange ventilation apparatus.

The present invention is achieved in view of the above, and has an object to obtain a heat exchange ventilation apparatus that is easy to manufacture one that does not easily cause an airflow leakage from an air passage on a high-pressure side to an air passage on a low-pressure side at low cost.

### MEANS FOR SOLVING PROBLEM

In order to solve the aforementioned problems, a heat exchange ventilation apparatus is provided according to the claims.

### EFFECT OF THE INVENTION

In the heat exchange ventilation apparatus of the present invention, even if twist or deflection occurs in the body casing at the time of arrangement, the air passage that includes the first gas flow portion and the second gas flow portion described above is less susceptible to the effect of the twist or deflection of the body casing. Therefore, even if the thickness of the body casing is decreased, it is easy to obtain one that does not easily cause the airflow leakage from the air passage on the high-pressure side to the air passage on the low-pressure side. The first flow guide and the second flow guide can be made of, for example, synthetic resin at a low cost. Thus, according to the present invention, it is easy to manufacture the heat exchange ventilation apparatus that does not easily cause the airflow leakage from the air passage on the high-pressure side to the air passage on the low-pressure side at low cost.

### BRIEF DESCRIPTION OF DRAWINGS

[Fig. 1] FIG. 1 is an exploded perspective view schematically illustrating one example of a heat exchange ventilation apparatus of the present invention.
[Fig. 2] FIG. 2 is an exploded perspective view schematically illustrating each of a heat exchanger, a first flow guide, and a second flow guide in the heat exchange ventilation apparatus shown in FIG. 1.
[Fig. 3] FIG. 3 is a partial cross-sectional side view schematically illustrating each of the heat exchanger, the first flow guide, and the second flow guide in the heat exchange ventilation apparatus shown in FIG. 1.
[Fig. 4] FIG. 4 is a schematic diagram illustrating a cross section when each of the heat exchanger and the second flow guide shown in FIG. 3 is cut along a plane parallel to a flow direction of outdoor air in the heat exchanger.
[Fig. 5] FIG. 5 is an exploded perspective view schematically illustrating a supply air blower and members arranged therearound in the heat exchange ventilation apparatus shown in FIG. 1.
[Fig. 6] FIG. 6 is an exploded perspective view schematically illustrating one example in which a part of an air passage including each of the first flow guide and the second flow guide is defined by utilizing a body casing in the heat exchange ventilation apparatus of the present invention.
[Fig. 7] FIG. 7 is an exploded perspective view schematically illustrating one example in which a bypass air passage is provided in the body casing in the heat exchange ventilation apparatus of the present invention. [Fig. 8] FIG. 8 is a plan view schematically illustrating arrangement of the bypass air passage in the heat exchange ventilation apparatus shown in FIG. 7.
[Fig. 9] FIG. 9 is a partial cross-sectional view schematically illustrating another example of an engaged configuration of each of the first flow guide and the second flow guide and the heat exchanger.
[Fig. 10] FIG. 10 is a cross-sectional view schematically illustrating an arrangement example of a sealing member that prevents leakage of airflow from a contact portion of two members.
[Fig. 11] FIG. 11 is a cross-sectional view schematically illustrating another arrangement example of the sealing member that prevents leakage of airflow from a contact portion of two members.
[Fig. 12] FIG. 12 is a side view schematically illustrating still another arrangement example of the sealing member that prevents leakage of airflow from a contact portion of two members.
[Fig. 13] FIG. 13 is a side view schematically illustrating still another arrangement example of the sealing member that prevents leakage of airflow from a contact portion of two members.
[Fig. 14] FIG. 14 is a partial cross-sectional side view schematically illustrating one example of arrangement of each of the heat exchanger, the first flow guide, the second flow guide, and a filter in the heat exchange ventilation apparatus in which the filter is arranged, in the heat exchange ventilation apparatus of the present invention.

### EXPLANATIONS OF LETTERS OR NUMERALS

- 11a: Outdoor-side suction opening
- 11b: Indoor-side supply opening
- 13a: Indoor-side suction opening
- 13b: Outdoor-side supply opening
- 20: Body casing
- 23: Stile portion
- 23a, 23b: Engaging portion (first engaging portion)
- 23c, 23d: Engaging portion (second engaging portion)
- 25: Frame
- 27: Heat exchange element
- 30: Heat exchanger
- 35a,: 35b Heat-exchanger engaging portion
- 40: First flow guide
- 43a, 43b: Heat-exchanger engaging portion
- 50: Second flow guide
- 52a: Circular engaging portion
- 60A, 60B: Fan casing
- 70: Supply air blower
- 80: Exhaust air blower
- 100A, 100B, 130: Heat exchange ventilation apparatus
- 110: Bypass air passage
- 120: Damper
- FP₁: First flow passage
- FP₂: Second flow passage
- GF₁: First gas flow portion
- GF₂: Second gas flow portion
- Sh₁, Sh₂: Sealing member

### BEST MODE(S) FOR CARRYING OUT THE INVENTION

Exemplary embodiments of a heat exchange ventilation apparatus according to the present invention will be explained below in detail with reference to the drawings. The present invention is not limited to the following embodiments.

### First Embodiment.

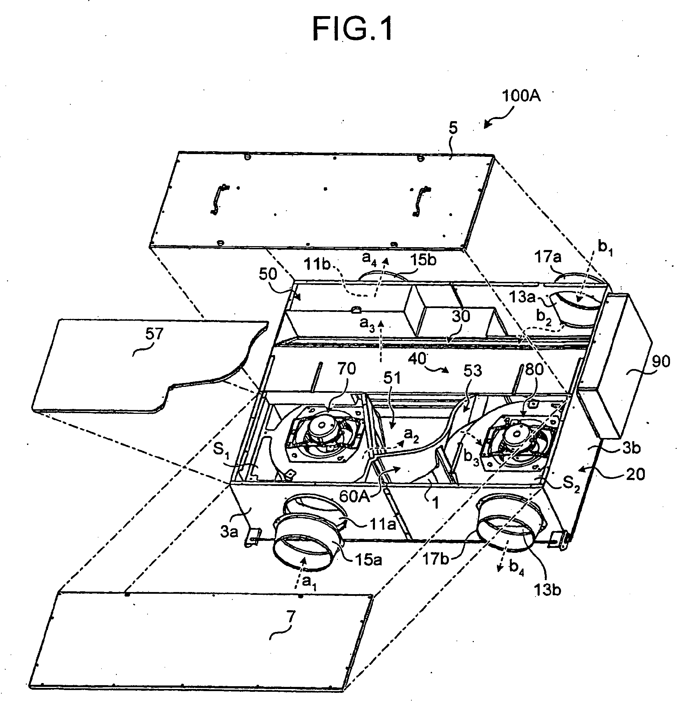

FIG. 1 is an exploded perspective view schematically illustrating one example of a heat exchange ventilation apparatus of the present invention. A heat exchange ventilation apparatus 100A shown in FIG. 1 includes a body casing 20, a heat exchanger 30, a first flow guide 40 mounted on the heat exchanger 30, a second flow guide 50 mounted on the heat exchanger 30, a fan casing 60A, a supply air blower 70, an exhaust air blower 80, a filler 85, and a control unit 90. Each of the heat exchanger 30, the first flow guide 40, the second flow guide 50, the fan casing 60A, the supply air blower 70, the exhaust air blower 80, and the filler 85 is accommodated in the body casing 20, and the control unit 90 is attached to the outer surface of the body casing 20.

The above-described body casing 20 includes a rectangular bottom plate portion 1, two sidewall forming members 3a and 3b that are attached to the bottom plate portion 1 and form a box whose upper end is open together with the bottom plate portion 1, a maintenance panel 5 that is attached to the upper end of each of the sidewall forming members 3a and 3b on the indoor side, and a top plate 7 that is attached to the upper end of each of the sidewall forming members 3a and 3b on the outdoor side.

An outdoor-side suction opening 11a and an indoor-side supply opening 11b (the indoor-side supply opening 11b is not shown) are formed in the sidewall forming member 3a, and an indoor-side suction opening 13a and an outdoor-side supply opening 13b are formed in the sidewall forming member 3b. Moreover, to the sidewall forming member 3a, a duct connecting tube 15a that surrounds the outdoor-side suction opening 11a is attached from outside of the sidewall forming member 3a and a duct connecting tube 15b that surrounds the indoor-side supply opening 11b is attached from outside of the sidewall forming member 3a. To the sidewall forming member 3b, a duct connecting tube 17a that surrounds the indoor-side suction opening 13a is attached from outside of the sidewall forming member 3b and a duct connecting tube 17b that surrounds the outdoor-side supply opening 13b is attached from outside of the sidewall forming member 3b. The duct connecting tubes 15a, 15b, 17a, and 17b described above constitute the body casing 20.

The heat exchanger 30 is arranged in the above-described body casing 20, and performs heat exchange between outdoor air taken into the body casing 20 from the outdoor-side suction opening 11a and indoor air taken into the body casing 20 from the indoor-side suction opening 13a. The first flow guide 40 is mounted on the heat exchanger 30 and forms a part of an air passage of outdoor air on the outdoor side of the heat exchanger 30. The second flow guide 50 is mounted on the heat exchanger 30 and forms a part of an air passage of outdoor air on the indoor side of the heat exchanger 30.

Upward movement of each of the heat exchanger 30, the first flow guide 40, and the second flow guide 50 is prevented by the maintenance panel 5 that is attached to each of the sidewall forming members 3a and 3b and covers these members. For the convenience of a maintenance operation such as replacement of the heat exchanger 30, the maintenance panel 5 is removably attached to each of the sidewall forming members 3a and 3b.

The fan casing 60A includes a stage portion 51 positioned on the bottom plate portion 1, a sidewall portion 53 arranged around the stage portion 51, and a cover 57 that is attached to the upper end of the sidewall portion 53 and covers the stage portion 51 and the sidewall portion 53. This fan casing 60A is arranged in an area on the outdoor side of the first flow guide 40 and defines an air passage of outdoor air from the outdoor-side suction opening 11a to the first flow guide 40.

The supply air blower 70 is arranged in an arrangement space S₁ in the fan casing 60A and operates under the control of the control unit 90. The exhaust air blower 80 is arranged in an arrangement space S₂ on the bottom plate portion 1 positioned between the sidewall portion 53 of the fan casing 60A and the sidewall forming member 3b when viewed in plan and operates under the control of the control unit 90. The supply air blower 70 is covered by the top plate 7 via the above-described cover 57 and the exhaust air blower 80 is covered by the top plate 7 without via the cover 57.

In the heat exchange ventilation apparatus 100A including each member described above, outdoor air passes through the duct connecting tube 15a and the outdoor-side suction opening 11a and is taken into the body casing 20, is further taken into the fan casing 60A and is sent to the first flow guide 40 side, passes through the inside of the first flow guide 40, the inside of the heat exchanger 30, and the inside of the second flow guide 50 in order and reaches the indoor-side supply opening 11b, and is blown therefrom into a room via the duct connecting tube 15b by operating the supply air blower 70. A supply air passage through which outdoor air flows is defined by the fan casing 60A, the first flow guide 40, the heat exchanger 30, and the second flow guide 50. In FIG. 1, a downstream direction of outdoor air in the supply air passage is indicated by broken line arrows a₁ to a₄.

Indoor air passes through the duct connecting tube 17a and the indoor-side suction opening 13a and is taken into the body casing 20, passes through the heat exchanger 30 and reaches the exhaust air blower 80 from a gap between the stage portion 51 of the fan casing 60A and the bottom plate portion 1 of the body casing 20, and is blown out of a room therefrom via the outdoor-side supply opening 13b and the duct connecting tube 17b by operating the exhaust air blower 80. A supply air passage through which indoor air flows is defined by the body casing 20, the second flow guide 50, the heat exchanger 30, and the fan casing 60A. In FIG. 1, the downstream direction of indoor air in an exhaust air passage is indicated by broken line arrows b₁ to b₄.

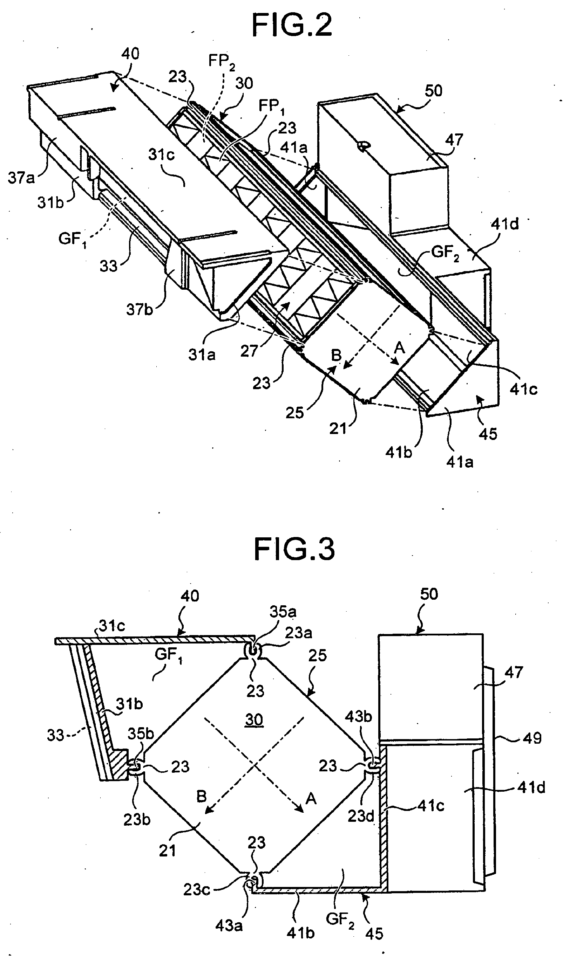

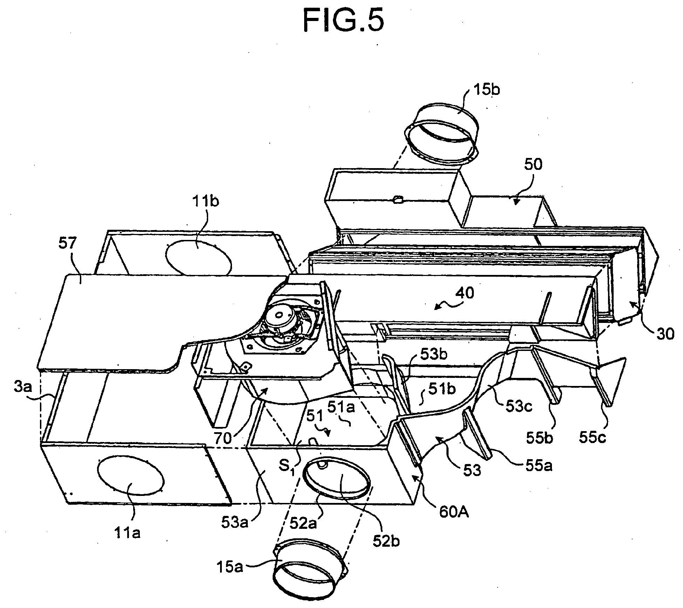

The heat exchange ventilation apparatus 100A having the above configuration is characterized by a way of defining the supply air passage, so that the way of defining the supply air passage in the heat exchange ventilation apparatus 100A is explained below in detail with reference to FIG. 2 to FIG. 5. After explaining the way of defining the supply air passage around the heat exchanger with reference to FIG. 2 to FIG. 4, the way of defining the supply air passage around the supply air blower is explained with reference to FIG. 5.

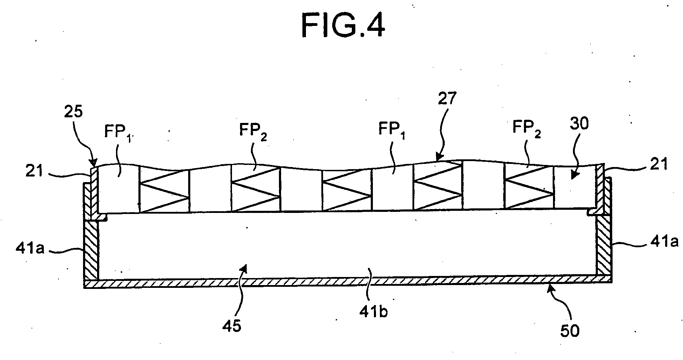

FIG. 2 is an exploded perspective view schematically illustrating each of the heat exchanger, the first flow guide, and the second flow guide in the heat exchange ventilation apparatus shown in FIG. 1, and FIG. 3 is a partial cross-sectional side view schematically illustrating each of the heat exchanger, the first flow guide, and the second flow guide in the heat exchange ventilation apparatus shown in FIG. 1. FIG. 4 is a schematic diagram illustrating a cross section when each of the heat exchanger and the second flow guide shown in FIG. 3 is cut along a plane parallel to a flow direction of outdoor air in the heat exchanger.

As shown in FIG. 2, the heat exchanger 30 in the heat exchange ventilation apparatus 100A (see FIG. 1) includes a frame 25 and a crossflow type heat exchange element 27 that is accommodated in the frame 25. Quadrangular end portions 21 and 21 are provided on both ends in the longitudinal direction of the frame 25, and these end portions 21 and 21 are connected with each other by four stile portions 23, 23, 23, and 23. The stile portion 23 is connected at each of the four corners of each end portion 21. The frame 25 is arranged in the body casing 20 (see FIG. 1) with one pair of the stile portions 23 and 23 being directed in a perpendicular direction and the other pair of the stile portions 23 and 23 being directed in a horizontal direction.

The heat exchange element 27 accommodated in this frame 25 includes first flow passages FP₁ that are directed from the upper portion of the outdoor side to the lower portion of the indoor side and second flow passages FP₂ that are directed from the upper portion of the indoor side to the lower portion of the outdoor side, and performs heat exchange between outdoor air flowing in the first flow passages FP₁ and indoor air flowing in the second flow passages FP₂. In FIG. 2, the downstream direction of outdoor air in the first flow passages FP₁ is indicated by one-dot chain line arrow A and the downstream direction of indoor air in the second flow passages FP₂ is indicated by one-dot chain line arrow B. In FIG. 2, only the sidewalls in the second flow passages FP₂ are shown.

As the above-described heat exchange element 27, for example, a total-heat-exchange-type, a sensible-heat-exchange-type, or a latent-heat-exchange-type element is used, in which a paper partition member having a sheet-like shape and a paper spacing member having corrugations are laminated alternatively, and a plurality of flow passages of air is formed between the partition member and the spacing member therebelow and between the partition member and the spacing member thereabove. Each flow passage formed below the partition member and each flow passage formed above the partition member are approximately orthogonal to each other when viewed in plan. For example, each of the flow passages formed above each partition member is used as the above-described first flow passage and each of the flow passages formed below each partition member is used as the above-described second flow passage. In the heat exchange ventilation apparatus 100A, the heat exchanger 30 is arranged in a state where the heat exchange element 27 lies on the bottom plate portion 1 (see FIG. 1).

The first flow guide 40 is a hollow member that includes end portions 31a and 31a (only one end portion 31a is shown in FIG. 2) positioned on both ends in a longitudinal direction, a sidewall portion 31b positioned on the outdoor side, and a top plate portion 31c, and the shape viewed from the end portion 31a side is an inverted triangular shape or an inverted trapezoidal shape in which the width of the lower portion in a height direction is narrower than the width of the upper portion in the height direction and the top plate portion 31c and the sidewall portion 31b form an acute angle.

The area of the first flow guide 40 on the heat exchanger 30 side is open over approximately the entire length, and the first flow guide 40 is mounted on the heat exchanger 30 thereby forming a first gas flow portion GF₁ that communicates with each of the first flow passages FP₁ in a state of being separated from the exhaust air passage between the first flow guide 40 and the heat exchanger 30. The first gas flow portion GF₁ included only in the supply air passage is formed between the first flow guide 40 and the heat exchanger 30. In the central portion of the sidewall portion 31b in the longitudinal direction, an opening portion 33 that is to be the inlet of the first gas flow portion GF₁ is provided. In the sidewall portion 31b, two engaging portions 37a and 37b that are engaged with the sidewall portion 53 (see FIG. 1) of the fan casing 60A are formed.

The second flow guide 50 includes a.base 45 and a spacer portion 47 positioned on the base 45. The base 45 is a hollow member that includes end portions 41a and 41a positioned on both ends in a longitudinal direction, a bottom plate portion 41b positioned on the bottom plate portion 1 (see FIG. 1) side of the body casing 20, a sidewall portion 41c positioned on the indoor-side suction opening 13a (see FIG. 1) side, and a prismatic protruding portion 41d that protrudes on the indoor side in an area closer to the indoor-side supply opening 11b (see FIG. 1) than the sidewall portion 41c. Each of the end portions 41a and 41a has a triangular shape and the protruding portion 41d has a rectangular shape when viewed in plan.

The area of this base 45 on the heat exchanger 30 side is open over approximately the entire length, and the second flow guide 50 is mounted on the heat exchanger 30 thereby forming a second gas flow portion GF₂ that communicates with each of the first flow passages FP₁ in a state of being separated from the exhaust air passage between the second flow guide 50 and the heat exchanger 30. The second gas flow portion GF₂ included only in the supply air passage is formed between the second flow guide 50 and the heat exchanger 30. On the end surface of the protruding portion 41d on the indoor side, a circular engaging portion 49 (see FIG. 3 to be described later) that is in contact with the inner peripheral wall of the indoor-side supply opening 11b provided in the sidewall forming member 3a and an opening portion surrounded by the circular engaging portion are formed, and the second gas flow portion GF₂ communicates with the indoor-side supply opening 11b. On the other hand, the spacer portion 47 has a rectangular parallelepiped shape and is formed on the protruding portion 41d to be in contact with the lower surface of the maintenance panel 5. This spacer portion 47 defines the exhaust air passage in an area on the indoor side of the heat exchanger 30 together with the sidewall portion 41c, the protruding portion 41d, and the body casing 20 (see FIG. 1). In FIG. 2, a downstream direction of outdoor air in the heat exchanger 30 is indicated by a one-dot chain line arrow A and a downstream direction of indoor air in the heat exchanger 30 is indicated by a one-dot chain line arrow B.

As shown in FIG. 3, engaging portions 23a and 23b formed in the heat exchanger 30 and heat-exchanger engaging portions 35a and 35b formed in the first flow guide 40 are engaged with each other, so that the above-described first flow guide 40 is removably mounted on the heat exchanger 30. In the similar manner, engaging portions 23c and 23d formed in the heat exchanger 30 and heat-exchanger engaging portions 43a and 43b formed in the second flow guide 50 are engaged with each other, so that the above-described second flow guide 50 is removably mounted on the heat exchanger 30.

Each of the engaging portions 23a to 23d in the heat exchanger 30 is formed on the stile portion 23 of the frame 25 in a protruding manner along the longitudinal axis of the heat exchanger 30. Each of the engaging portions 23a to 23d is a female engaging portion that has a groove portion along the longitudinal axis of the heat exchanger 30. The engaging portion 23a positioned on the maintenance panel 5 (see FIG. 1) side and the engaging portion 23b positioned on the outdoor side function as a first engaging portion that is engaged with the heat-exchanger engaging portions 35a and 35b of the first flow guide 40, and the engaging portion 23c positioned on the bottom plate portion 1 (see FIG. 1) side and the engaging portion 23d positioned on the indoor side function as a second engaging portion that is engaged with the heat-exchanger engaging portions 43a and 93b of the second flow guide 50.

The above-described heat-exchanger engaging portion 35a of the first flow guide 40 is formed at the end portion of the lower surface of the top plate portion 31c on the heat exchanger 30 side and protrudes downward, and the heat-exchanger engaging portion 35b is formed at the lower portion of the inner surface of the sidewall portion 31b and protrudes on the heat exchanger 30 side. Each of the heat-exchanger engaging portions 35a and 35b is a male engaging portion that has a convex shape along the longitudinal axis of the first flow guide 40. Because the side surface shape of the first flow guide 40 when viewed from the end portion 31a (see FIG. 2) side is selected to be an inverted triangular shape or an inverted trapezoidal shape as described above, attachment and removal of the first flow guide 40 to and from the heat exchanger 30 can be easily performed from above the heat exchanger 30.

Moreover, the above-described heat-exchanger engaging portion 43a of the second flow guide 50 is formed at the end portion of the bottom plate portion 41b of the base 45 on the heat exchanger 30 side and protrudes upward, and the heat-exchanger engaging portion 43b is formed at the upper portion of the sidewall portion 41c of the base 45 on the heat exchanger 30 side and protrudes on the heat exchanger 30 side. Each of the heat-exchanger engaging portions 43a and 43b is a male engaging portion that has a convex shape along the longitudinal axis of the second flow guide 50. In FIG. 3 also, in the similar manner to FIG. 2, a downstream direction of outdoor air in the heat exchanger 30 is indicated by the one-dot chain line arrow A and a downstream direction of indoor air in the heat exchanger 30 is indicated by the one-dot chain line arrow B.

As shown in FIG. 4, the second flow guide 50 is longer than the heat exchanger 30, and each end portion 41a of the.second flow guide 50 is partially thinned, so that the outer surface of each end portion 21 of the heat exchanger 30 comes into contact with a stepped engagement surface formed on the inner surface side of the end portion 41a. Although not shown, the above-described first flow guide 40 is also longer than the heat exchanger 30, and each end portion 31a of the first flow guide 40 is partially thinned, so that the outer surface of each end portion 21 of the heat exchanger 30 comes into contact with a stepped engagement surface formed on the inner surface side of the end portion 31a in the similar manner to the case for the second flow guide 50.

Each of the first flow guide 40 and the second flow guide 50 is mounted on the heat exchanger 30 as described above, so that the supply air passage separated from the exhaust air passage by the heat exchanger 30, the first flow guide 40, and the second flow guide 50 is defined in the heat exchanger 30 and therearound. In other words, the supply air passage is defined, in which outdoor air that flows into the first gas flow portion GF₁ from the opening portion 33 of the first flow guide 40 flows down each first flow passage FP₁ (see FIG. 2) in the heat exchange element 27 to enter the second gas flow portion GF₂ and reaches the indoor-side supply opening 11b from the second gas flow portion GF₂.

Next, the way of defining the supply air passage around the supply air blower is explained with reference to FIG. 5. FIG. 5 is an exploded perspective view schematically illustrating the supply air blower and members arranged therearound. As shown in FIG. 5, the supply air blower 70 is arranged in the arrangement space S₁ in the fan casing 60A. The fan casing 60A includes the stage portion 51, the sidewall portion 53 arranged around the stage portion 51, support portions 55a to 55c that support the sidewall portion 53 on the bottom plate portion 1 (see FIG. 1) of the body casing 20, and the cover 57.

The above-described stage portion 51 includes a first stage portion 51a that defines the bottom in the arrangement space S₁ and a second stage portion 51b that defines the bottom of the supply air passage from the supply air blower 70 to the first flow guide 40. On the other hand, the sidewall portion 53 includes a first sidewall portion 53a, a second sidewall portion 53b, and a third sidewall portion 53c. Each of the support portions 55a to 55c is formed on the third sidewall portion 53c.

The first sidewall portion 53a of the sidewall portion 53 is bent in an L shape along the inner peripheral surface of the sidewall forming member 3a forming the body casing 20, and the lower end of the first sidewall portion 53a is in contact with the above-described bottom plate portion 1. In the area of the first sidewall portion 53a on the outdoor-side suction opening 11a side, a circular engaging portion 52a that is inserted into the outdoor-side suction opening 11a and is in contact with the inner peripheral wall of the outdoor-side suction opening 11a is formed and an area surrounded by the circular engaging portion 52a forms an opening portion 52b.

The second sidewall portion 53b is formed to protrude above the first stage portion 51a from an area on the first flow guide 40 side to an area on the sidewall forming member 3b (see FIG. 1) side in the first stage portion 51a, and defines the arrangement space S₁ together with the first sidewall portion 53a and defines the supply air passage from the supply air blower 70 to the first flow guide 40 together with the third sidewall portion 53c. The above-described engaging portion 37a (see FIG. 2) formed in the first flow guide 40 is engaged with the second sidewall portion 53b.

The third sidewall portion 53c is formed at the end portion of the second stage portion 51b on the sidewall forming member 3b side and protrudes on the second stage portion 51b, and defines the supply air passage from the supply air blower 70 to the first flow guide 40 together with each of the second stage portion 51b and the second sidewall portion 53b. This third sidewall portion 53c is connected to the first sidewall portion 53a and extends in a wave-like manner from the first sidewall portion 53a to the first flow guide 40 side, and is engaged with the above-described engaging portion 37b (see FIG. 2) formed in the first flow guide 40.

After the stage portion 51 and the sidewall portion 53 described above are arranged in the body casing 20 and the supply air blower 70 is arranged in the arrangement space S₁, the cover 57 is attached to the upper end of the sidewall portion 53, whereby the supply air passage in an area on the outdoor side of the heat exchanger 30 is defined. The bottom of the supply air passage is defined by the first stage portion 51a and the second stage portion 51b, the ceiling of the supply air passage is defined by the cover 57, and the extent in the horizontal direction in the supply air passage is defined by the first sidewall portion 53a, the second sidewall portion 53b, and the third sidewall portion 53c.

At the same time, the ceiling of the exhaust air passage in an area on the outdoor.side of the heat exchanger 30 is defined by the first stage portion 51a, the second stage portion 51b, and the top plate 7 (see FIG. 1). The bottom of the exhaust air passage in the area is defined by the bottom plate portion 1 (see FIG. 1) and the extent in the horizontal direction in the exhaust air passage is defined by the first sidewall portion 53a and the sidewall forming member 3b (see FIG. 1).

In the heat exchange ventilation apparatus 100A in which the supply air passage is defined by the heat exchanger 30, the first flow guide 40, the second flow guide 50, and the fan casing 60A as explained above, even if twist or deflection occurs in the body casing 20 at the time of arrangement, at least the supply air passage around the heat exchanger 30 is less susceptible to the effect of twist or deflection of the body casing 20. The airflow leakage from the air passage (supply air passage) on the high-pressure side to the air passage (exhaust air passage) on the low-pressure side around the heat exchanger 30 is suppressed by the first flow guide 40 and the second flow guide 50.

Therefore, in the heat exchange ventilation apparatus 100A, even if the thickness of the body casing 20 is decreased, it is easy to manufacture one that does not easily cause the airflow leakage from the air passage on the high-pressure side to the air passage on the low-pressure side. Each of the first flow guide 40 and the second flow guide 50 can be made of, for example, synthetic resin at a low cost, so that, in the heat exchange ventilation apparatus 100A, it is easy to manufacture one that does not easily cause the airflow leakage from the air passage on the high-pressure side to the air passage on the low-pressure side at low cost.

Moreover, because the fan casing 60A is included, the supply air passage is less susceptible to the effect of twist or deflection of the body casing 20 even in an area on the outdoor side of the first flow guide 40 and the airflow leakage from the supply air passage in the area is suppressed by the fan casing 60A. The fan casing 60A can be made of, for example, synthetic resin at a low cost, so that, also from this point of view, in the heat exchange ventilation apparatus 100A, it is easy to manufacture one that does not easily cause the airflow leakage from the air passage on the high-pressure side to the air passage on the low-pressure side at low cost.

### Second Embodiment.

The heat exchange ventilation apparatus of the present invention can also define a part of the air passage including each of the first flow guide and the second flow guide by utilizing the body casing.

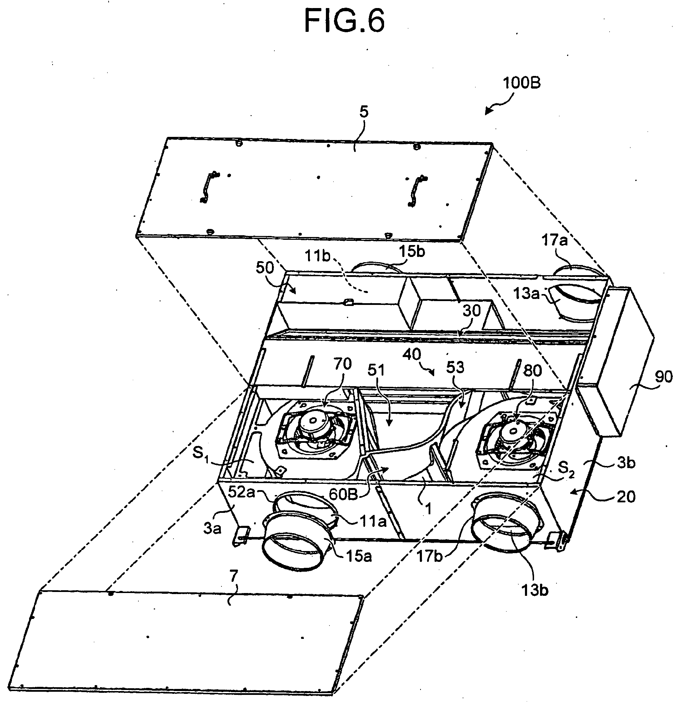

FIG. 6 is an exploded perspective view schematically illustrating one example of the heat exchange ventilation apparatus in which a part of the air passage including each of the first flow guide and the second flow guide is defined by utilizing the body casing. In a heat exchange ventilation apparatus 100B shown in FIG. 6, the cover 57 of the heat exchange ventilation apparatus 100A shown in FIG. 1 is omitted and the supply air passage in an area on the outdoor side of the first flow guide 40 is defined by the top plate 7 and a fan casing 60B. The top plate 7 is hermetically joined to the fan casing 60B by using a sealing member. Each component member shown in FIG. 6 is already explained in the first embodiment with reference to FIG. 1, so that the component members are given the reference symbols same as those used in FIG. 1 and explanation thereof is omitted. The fan casing in which the cover is omitted is given a new reference symbol "60B".

The heat exchange ventilation apparatus 100B configured as above has a technical effect similar to the heat exchange ventilation apparatus 100A (see FIG. 1) explained in the first embodiment. Because the fan casing 60B that does not include the cover is used, the manufacturing cost can be easily reduced compared to the heat exchange ventilation apparatus 100A.

### Third Embodiment.

The heat exchange ventilation apparatus of the present invention can be configured to be able to select a heat exchange ventilation operation by which heat exchange between outdoor air and indoor air by a heat exchanger is performed to ventilate and a natural ventilation operation in which ventilation without heat exchange between outdoor air and indoor air by a heat exchanger is performed. In order to make it possible to select the heat exchange ventilation operation and the natural ventilation operation, a bypass air passage that bypasses the heat exchanger is provided in the body casing and a damper is arranged near the inlet of the flow passage in addition to the supply air passage and the exhaust air passage.

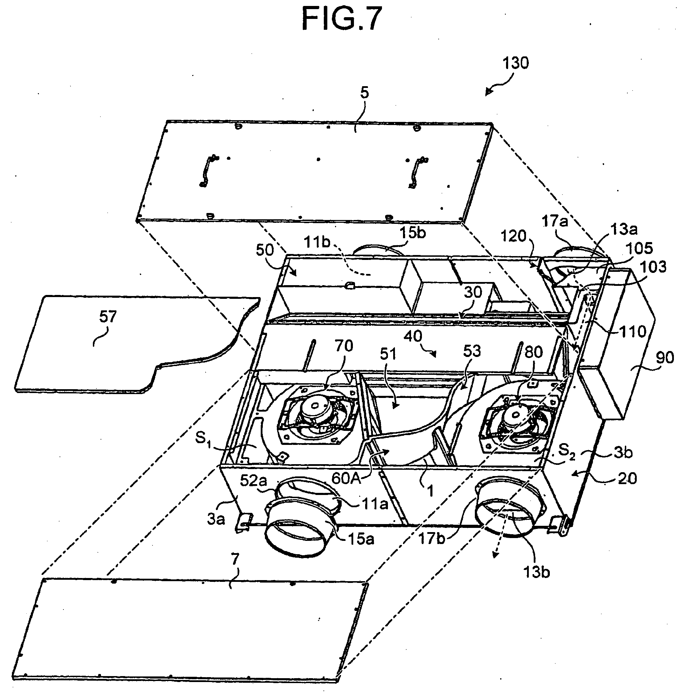

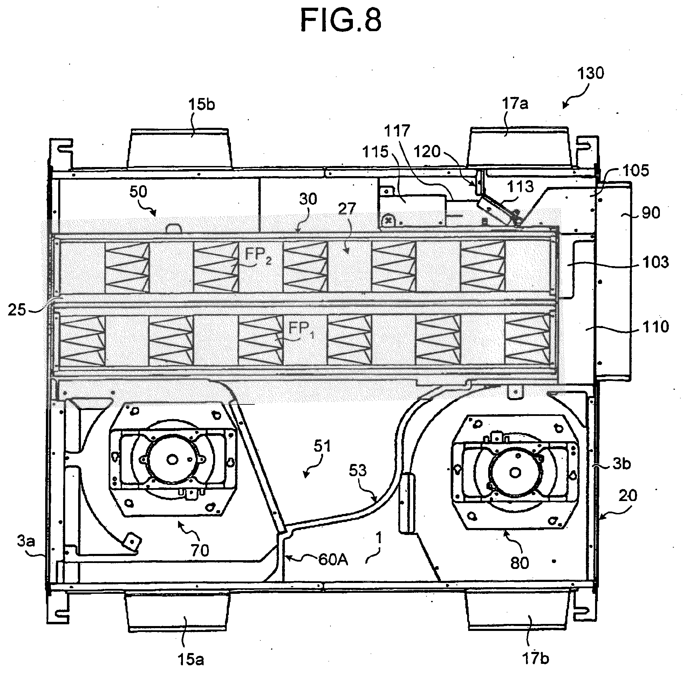

FIG. 7 is an exploded perspective view schematically illustrating one example of the heat exchange ventilation apparatus in which the bypass air passage is provided in the body casing. FIG. 8 is a plan view schematically illustrating arrangement of the bypass air passage in the heat exchange ventilation apparatus shown in FIG. 7. Among component members shown in FIG. 7 or FIG. 8, a component member common to that shown in FIG. 1 is given the reference symbol same as that used in FIG. 1 and explanation thereof is omitted. In FIG. 8, the maintenance panel 5, the top plate 7, and the cover 57 are not shown.

In a heat exchange ventilation apparatus 130 shown in FIG. 7 and FIG. 8, a bypass air passage 110 that branched off from the exhaust air passage before the heat exchanger 30A and reaches the exhaust air blower 80 while bypassing the heat exchanger 30 is defined. In this bypass air passage 110, an L-shaped spacing member 103 that spaces between the sidewall forming member 3b and the heat exchanger 30 and the second flow guide 50 are arranged. Moreover, at the end of the bypass air passage 110 on the indoor-side suction opening 13a side, an introducing tube portion 105 to be the inlet of the bypass air passage 110 is arranged.

In an area near the indoor-side suction opening 13a in the body casing 20, a damper 120 that opens and closes the above-described bypass air passage 110 is arranged. This damper 120 includes an air passage switching plate 113 that opens and closes the bypass air passage 110 by displacing in a predetermined direction, a driving source 115 such as a motor that is controlled to operate by the control unit 90, and a link member 117 (see FIG. 8) that transmits the power generated by the driving source 115 to the air passage switching plate 113. When opening the bypass air passage 110, the flow passage from the indoor-side suction opening 13a toward the heat exchanger 30 is closed by the air passage switching plate 113 and the inlet of the introducing tube portion 105 is opened. Moreover, when closing the bypass air passage 110, the inlet of the introducing tube portion 105 is closed by the air passage switching plate 113 and the flow passage from the indoor-side suction opening 13a toward the heat exchanger 30 is opened. FIG. 7 and FIG. 8 illustrate the state where the bypass air passage 110 is open.

For example, the heat exchange ventilation apparatus 130 is configured such that a temperature sensor that detects the temperature of outdoor air is arranged near the duct connecting tube 15a and a temperature sensor that detects the temperature of indoor air is arranged near the duct connecting tube 17a, and the control unit 90 determines whether performing the heat exchange ventilation operation is appropriate and performing the natural ventilation operation is appropriate based on the detection results of these temperature sensors and the control unit 90 controls the operation of the damper 120 in accordance with the result of the determination.

The heat exchange ventilation apparatus 130 configured as above has a technical effect similar to the heat exchange ventilation apparatus 100A (see FIG. 1) explained in the first embodiment. For example, when a comfortable indoor environment can be easily obtained even if the heat exchange ventilation operation is not performed in spring or fall, the natural ventilation operation can be performed, so that the air-conditioning function can be easily improved compared to the heat exchange ventilation apparatus 100A.

Explanation is given for the heat exchange ventilation apparatus of the present invention with reference to three embodiments; however, as described above, the present invention is not limited to the above embodiments. The heat exchange ventilation apparatus of the present invention is basically sufficient so long as the first flow guide that includes the first gas flow portion to be the air passage and the second flow guide that includes the second gas flow portion to be the air passage are mounted on the heat exchanger and the above-described first gas flow portion and the above-described second gas flow portion are included in any one of the supply air passage and the exhaust air passage.

The engaging portions used when mounting the first flow guide on the heat exchanger, i.e., the heat exchanger engaging portion in the first flow guide and the first engaging portion in the heat exchanger are sufficient so long as the airflow leakage from the air passage on the high-pressure side to the air passage on the low-pressure side can be suppressed, and it is also applicable that both of them are in surface contact with or in line contact with each other in addition to the case in which one is female type and the other is male type as explained in the first embodiment. The same is true for the heat exchanger engaging portion in the second flow guide and the second engaging portion in the heat exchanger. Furthermore, the same is true for the engaged configuration of the end portion of the heat exchanger with the end portion of the first flow guide or the end portion of the second flow guide.

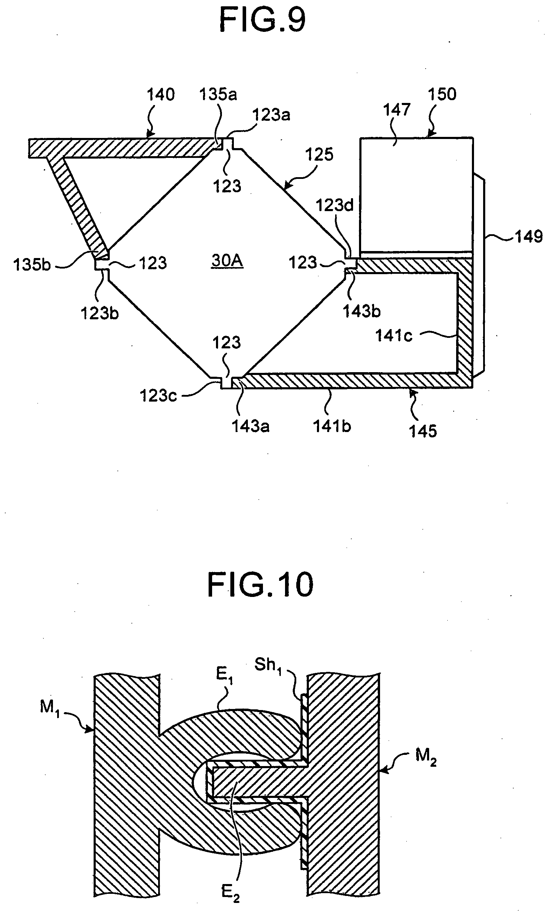

FIG. 9 is a partial cross-sectional view schematically illustrating another example of the engaged configuration of each of the first flow guide and the second flow guide with the heat exchanger. In FIG. 9, a component having a function common to the component shown in FIG. 3 is given a reference symbol obtained by adding "100" to the numerical part of the reference symbol used in FIG. 3, except the heat exchanger. In the example shown in FIG. 9, a first engaging portion 123a, a first engaging portion 123b, a second engaging portion 123c, or a second engaging portion 123d of which perpendicular cross-sectional shape is rectangular is formed in each stile portion 123 in a frame 125 of the heat exchanger 30A.

Each of the first engaging portions 123a and 123b and the second engaging portions 123c and 123d is a convex portion formed along the longitudinal axis of the heat exchanger 30A and a flat surface is formed on both sides in the line width direction of each of the engaging portions 123a to 123d. A heat-exchanger engaging portion 135a in a first flow guide 140 is in surface contact with the side surface of the first engaging portion 123a on the outdoor side and the flat surface positioned on the outdoor side of the first engaging portion 123a among the above-described flat surfaces, and a heat-exchanger engaging portion 135b is in line contact with the side surface of the first engaging portion 123b on the upper side and the flat surface positioned upward of the first engaging portion 123b among the above-described flat surfaces. Moreover, a heat-exchanger engaging portion 143a .in a second flow guide 150 is in surface contact with the side surface of the second engaging portion 123c on the indoor side and the flat surface positioned on the indoor side of the second engaging portion 123c among the above-described flat surfaces, and a heat-exchanger engaging portion 143b is in surface contact with two side surfaces of the second engaging portion 123d and the flat surface positioned downward of the second engaging portion 123d among the above-described flat surfaces. The engaged configuration of the end portion of the heat exchanger 30A and the end portion of the first flow guide 140, and the engaged configuration of the end portion of the heat exchanger 30A and the end portion of the second flow guide 150 are each similar to the engaged configuration explained with reference to FIG. 4 in the first embodiment.

Moreover, the air passage defined by the fan casing can be the exhaust air passage instead of the supply air passage. For example, the supply air blower 70 in the heat exchange ventilation apparatus 100A shown in FIG. 1 is made to function as the exhaust air blower and the exhaust air blower 80 shown in FIG. 1 is made to function as the supply air blower, so that the heat exchange ventilation apparatus in which the exhaust air passage of the heat exchanger 30 and therearound is defined by the heat exchanger 30, the first flow guide 40 and the second flow guide 50, and the exhaust air passage on the outdoor side of the heat exchanger 30 is defined by the fan casing 60A can be obtained.

Each of the supply air blower and the exhaust air blower is preferably provided on the outdoor side of the heat exchanger in view of reducing the noise of the heat exchange ventilation apparatus; however, it is also possible to arrange one of them on the outdoor side of the heat exchanger and arrange the other on the indoor side of the heat exchanger. It is needless to say that each of the supply air blower and the exhaust air blower can be arranged on the indoor side of the heat exchanger.

Moreover, in view of suppressing the airflow leakage from the air passage on the high-pressure side to the air passage on the low-pressure side, it is preferable to prevent leakage of airflow from the contact portion of the first flow guide and the heat exchanger and the contact portion of the second flow guide and the heat exchanger by a sealing member. From the similar point of view, for example, it is preferable to prevent leakage of airflow at the contact portion of the second flow guide 50 and the indoor-side supply opening 11b, the contact portion of the fan casing 60A and the outdoor-side suction opening 11a, and the contact portion of the cover 57 and the sidewall portion 53 in the heat exchange ventilation apparatus 100A shown in FIG. 1, the contact portion of the top plate 7 and the sidewall portion 53 in the heat exchange ventilation apparatus 100B shown in FIG. 6, and the like by the sealing member.

In the case of preventing leakage of airflow by using the sealing member, for example, in the similar manner to the case of the heat exchanger 30 and the first flow guide 40 explained in the first embodiment, an engaging portion that is engaged with each of two members that are in contact with each other is formed in advance, so that the leakage of airflow can be easily prevented. As the above-described sealing member, for example, a cushioned film-like or sheet-like one, one whose property before being cured is cream or gel, and the like can be used.

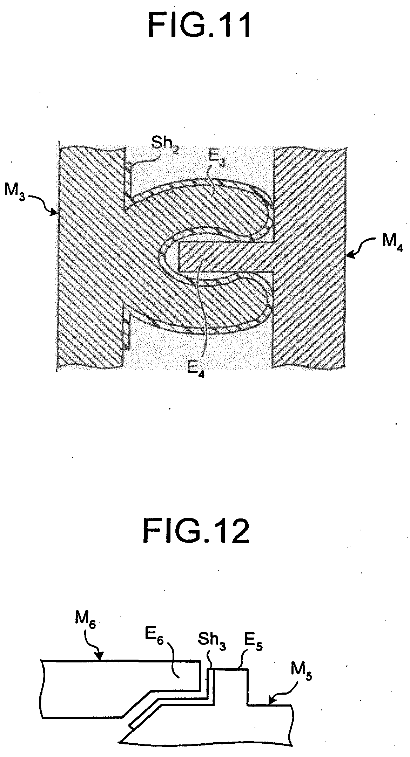

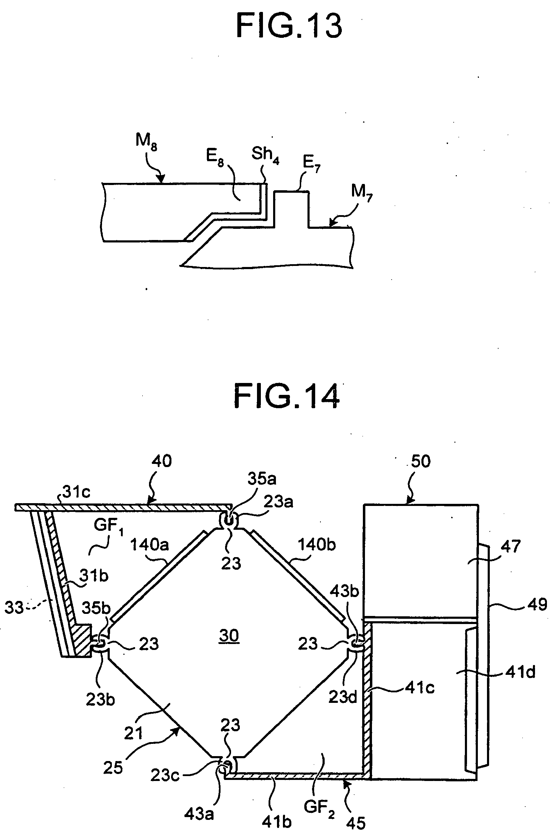

Each of FIG. 10 and FIG. 11 is a cross-sectional view schematically illustrating an arrangement example of the sealing member that prevents the leakage of airflow from a contact portion of two members, and each of FIG. 12 and FIG. 13 is a side view schematically illustrating an arrangement example of the sealing member that prevents the leakage of airflow from a contact portion of two members. In the example shown in FIG. 10, in engaging a female engaging portion E₁ formed in a first member M₁ and a male engaging portion E₂ formed in a second member M₂ with each other, a cushioned sheet-like or film-like sealing member Sh₁ is provided to the engaging portion E₂ and therearound in advance, and thereafter, the engaging portion E₁ and the engaging portion E₂ are engaged with each other to prevent the leakage of airflow from the contact portion of the first member M₁ and the second member M₂.

Moreover, in the example shown in FIG. 11, in engaging a female engaging portion E₃ formed in a first member M₃ and a male engaging portion E₄ formed in a second member M₄ with each other, a cushioned sheet-like or film-like sealing member Sh₂ is provided to the engaging portion E₃ and therearound in advance, and thereafter, the engaging portion E₃ and the engaging portion E₄ are engaged with each other to prevent the leakage of airflow from the contact portion of the first member M₃ and the second member M₄.

In the example shown in FIG. 12, in engaging an engaging portion E₅ formed in a first member M₅ and an engaging portion E₆ formed in a second member M₆ with each other, a cushioned sheet-like or film-like sealing member Sh₃ is provided to the engaging portion E₅ and therearound in advance, and thereafter, the engaging portion E₅ and the engaging portion E₆ are engaged with each other to prevent the leakage of airflow from the contact portion of the first member M₅ and the second member M₆. In the example shown in FIG. 13, in engaging an engaging portion E₇ formed in a first member M₇ and an engaging portion E₈ formed in a second member M₈ with each other, a cushioned sheet-like or film-like sealing member Sh₄ is provided to the engaging portion E₈ and therearound in advance, and thereafter, the engaging portion E₇ and the engaging portion E₈ are engaged with each other to prevent the leakage of airflow from the contact portion of the first member M₇ and the second member M₈.

In view of improving utility of the heat exchange ventilation apparatus of the present invention, it is preferable to prevent dust included in outdoor air or indoor air from adhering to the heat exchange element in the heat exchanger by a filter. FIG. 14 is a partial cross-sectional side view schematically illustrating one example of arrangement of each of the heat exchanger, the first flow guide, the second flow guide, and the filter in the heat exchange ventilation apparatus in which the filter is arranged. In the example shown in.FIG. 14, a first filter 140a is arranged on the inflow side of the outdoor air in the heat exchanger 30 and a second filter 140b is arranged on the inflow side of the indoor air in the heat exchanger 30.

With the arrangement of these first filter 140a and second filter 140b, dust included in outdoor air or indoor air is prevented from adhering to the heat exchange element in the heat exchanger 30, so that the lowering of the heat exchange efficiency due to adhesion of dust described above can be suppressed. A component member common to that shown in FIG. 3 among the component members shown in FIG. 14 is given the reference symbol same as that used in FIG. 3 and explanation thereof is omitted. For the heat exchange ventilation apparatus in the present invention, various changes, modifications, combinations, and the like other than the above-described ones can be made.

### INDUSTRIAL APPLICABILITY

The heat exchange ventilation apparatus according to the present invention is useful for a household or business heat exchange ventilation apparatus.

## Claims

1. A heat exchange ventilation apparatus in which a supply air blower (70) and an exhaust air blower (80) are arranged in a body casing (20) that has an outdoor-side suction opening (11a), an indoor-side supply opening (11b), an indoor-side suction opening (13a), and an outdoor-side supply opening (13b), and a supply air passage that supplies outdoor air taken from the outdoor-side suction opening (11a) through the indoor-side supply opening (11b) into a room by the supply air blower (70) and an exhaust air passage that supplies indoor air taken from the indoor-side suction opening (13a) through the outdoor-side supply opening (13b) to outside of the room by the exhaust air blower (80) are formed in the body casing (20), comprising:
a heat exchanger (30) that includes a heat exchange element (27) in which a first flow passage (FP1) to be a part of the supply air passage and a second flow passage (FP2) to be a part of the exhaust air passage are formed and performs heat exchange between the outdoor air and the indoor air by the heat exchange element (27);
a first flow guide (40) that is mounted on the heat exchanger (30), and defines a first gas flow portion (GF1) that communicates with any one of the first flow passage (FP1) and the second flow passage (FP2) and is included only in any one of the supply air passage and the exhaust air passage on an outdoor side of the heat exchanger (30); and
a second flow guide (50) that is mounted on the heat exchanger, and defines a second gas flow portion (GF2) that communicates with a flow passage that communicates with the first gas flow portion (GF1) out of the first flow passage (FP1) and the second flow passage (FP2) and is included only in any one of the supply air passage and the exhaust air passage on an indoor side of the heat exchanger (30); and
any one of the supply air passage and the exhaust air passage is defined by the first flow guide, the heat exchanger and the second flow guide; and
**characterized in that**:
the area of the first flow guide (40) on the heat exchanger (30) side is open across the entire length of the heat exchanger; and
the area of the second flow guide (50) on the heat exchanger (30) side is open across the entire length of the heat exchanger.

2. The heat exchange ventilation apparatus according to claim 1, wherein
the first gas flow portion (GF1) defined by the first flow guide (40) and the second gas flow portion (GF2) defined by the second flow guide (50) are each included only in the exhaust air passage, and
the supply air passage and the exhaust air passage around the heat exchanger (30) are separated from each other by the first flow guide (40) and the second flow guide (50).

3. The heat exchange ventilation apparatus according to claim 1, wherein
the first gas flow portion (GF1) defined by the first flow guide (40) and the second gas flow portion (GF2) defined by the second flow guide (50) are each included only in the supply air passage, and
the supply air passage and the exhaust air passage around the heat exchanger (30) are separated from each other by the first flow guide (40) and the second flow guide (50).

4. The heat exchange ventilation apparatus according to claim 1, further comprising a fan casing (60A) that accommodates the supply air blower (70) and defines a part of the supply air passage.

5. The heat exchange ventilation apparatus according to claim 4, wherein the fan casing (60A) includes a circular engaging portion (52a) that is engaged with the outdoor-side suction opening (11a), and defines a supply air passage from the outdoor-side suction opening (11a) to the first flow guide (40).

6. The heat exchange ventilation apparatus according to claim 1, further comprising a fan casing (60B) that accommodates the exhaust air blower and defines a part of the exhaust air passage.

7. The heat exchange ventilation apparatus according to claim 1, wherein
the first flow guide (40) includes a heat-exchanger engaging portion (35a, 35b) that is engaged with the heat exchanger (30) along a longitudinal axis of the heat exchanger,
the heat exchanger (30) includes a first engaging portion (23a, 23b) that is engaged with the heat-exchanger engaging portion (35a, 35b) of the first flow guide (40), and
the heat exchanger engaging portion (35a, 35b) and the first engaging portion (23a, 23b) are removably engaged with each other.

8. The heat exchange ventilation apparatus according to claim 1, wherein
the second flow guide (50) includes a heat-exchanger engaging portion (43a, 43b) that is engaged with the heat exchanger (30) along a longitudinal axis of the heat exchanger (30),
the heat exchanger (30) includes a second engaging portion (23c, 23d) that is engaged with the heat-exchanger engaging portion (43a, 43b) of the second flow guide (50), and
the heat exchanger engaging portion (43a, 43b) and the second engaging portion (23c, 23d) are removably engaged with each other.

9. The heat exchange ventilation apparatus according to claim 1, wherein a shape of the first flow guide (40) when viewed from an end surface side in a longitudinal direction of the first flow guide (40) is an inverted triangular shape or an inverted trapezoidal shape.

10. The heat exchange ventilation apparatus according to claim 1, further comprising:
a bypass air passage (110) that is branched off from any one of the supply air passage and the exhaust air passage and bypasses the heat exchanger (30); and
a damper (120) that is arranged near a branched location of the bypass air passage (110) and opens and closes the bypass air passage (110).

11. The heat exchange ventilation apparatus according to claim 10, wherein the bypass air passage (70) is branched off from the exhaust air passage.

## Patentansprüche

1. Eine Wärmeaustausch-Ventilationsvorrichtung, in welcher ein Zuluftgebläse (70) und ein Abluftgebläse (80) in einem Gehäuse (20) angeordnet sind, welches eine außengelegene Saugöffnung (11a), eine innengelegene Versorgungsöffnung (11b), eine innengelegene Saugöffnung (13a) und eine außengelegene Versorgungsöffnung (13b) enthält, und wobei ein Zuluftkanal, welcher durch das Zuluftgebläse (70) Außenluft, die der außengelegenen Saugöffnung (11a) entnommen wurde, durch die innengelegene Versorgungsöffnung (11b) hindurch in einen Raum führt, und ein Abluftkanal, welcher durch das Abluftgebläse (80) Innenluft, die der innengelegenen Saugöffnung (13a) entnommen wurde, durch die außengelegene Versorgungsöffnung (13b) hindurch in einen Bereich außerhalb des Raumes führt, in dem Gehäuse (20) ausgebildet sind, umfassend:
einen Wärmeaustauscher (30), welcher ein Wärmeaustauschelement (27) enthält, in dem ein erster Strömungskanal (FP1) derart ausgebildet ist, dass er einen Teil des Zuluftkanals bildet, und ein zweiter Strömungskanal (FP2) derart ausgebildet ist, dass er einen Teil des Abluftkanals bildet, und wobei der Wärmeaustauscher (30) durch das Wärmeaustauschelement (27) einen Wärmeaustausch zwischen der Außenluft und der Innenluft durchführt;
eine erste Strömungsführung (40), welche auf dem Wärmeaustauscher (30) angebracht ist, und einen ersten Gasströmungsteil (GF1) definiert, der mit einem des ersten Strömungskanals (FP1) und des zweiten Strömungskanals (FP2) kommuniziert und der ausschließlich in einem des Zuluftkanals und des Abluftkanals auf einer Außenseite des Wärmeaustauschers (30) enthalten ist; und
eine zweite Strömungsführung (50), welche auf dem Wärmeaustauscher angebracht ist, und einen zweiten Gasströmungsteil (GF2) definiert, welcher mit einem Strömungskanal kommuniziert, der mit dem ersten Gasströmungsteil (GF1) aus dem ersten Strömungskanal (FP1) und dem zweiten Strömungskanal (FP2) kommuniziert, und der ausschließlich in einem des Zuluftkanals und des Abluftkanals auf einer Innenseite des Wärmeaustauschers (30) enthalten ist; und
jeder des Zuluftkanals und des Abluftkanals durch die erste Strömungsführung, den Wärmeaustauscher und die zweite Strömungsführung definiert ist; und
**dadurch gekennzeichnet, dass**:
die Fläche der ersten Strömungsführung (40) auf der Seite des Wärmeaustauschers (30) über die gesamte Länge des Wärmeaustauschers offen ist; und
die Fläche der zweiten Strömungsführung (50) auf der Seite des Wärmeaustauschers (30) über die gesamte Länge des Wärmeaustauschers offen ist.

2. Die Wärmeaustausch-Ventilationsvorrichtung nach Anspruch 1, wobei
der erste Gasströmungsteil (GF1), welcher durch die erste Strömungsführung (40) definiert ist, und der zweite Gasströmungsteil (GF2), welcher durch die zweite Strömungsführung (50) definiert ist, jeweils nur in dem Abluftkanal enthalten sind, und
der Zuluftkanal und der Abluftkanal um den Wärmeaustauscher (30) herum durch die erste Strömungsführung (40) und die zweite Strömungsführung (50) voneinander getrennt sind.

3. Die Wärmeaustausch-Ventilationsvorrichtung nach Anspruch 1, wobei
der erste Gasströmungsteil (GF1), welcher durch die erste Strömungsführung (40) definiert ist, und der zweite Gasströmungsteil (GF2), welcher durch die zweite Strömungsführung (50) definiert ist, jeweils nur in dem Zuluftkanal enthalten sind, und
der Zuluftkanal und der Abluftkanal um den Wärmeaustauscher (30) herum durch die erste Strömungsführung (40) und die zweite Strömungsführung (50) voneinander getrennt sind.

4. Die Wärmeaustausch-Ventilationsvorrichtung nach Anspruch 1, weiter umfassend ein Lüftergehäuse (60A), welches das Zuluftgebläse (70) aufnimmt und einen Teil des Zuluftkanals definiert.

5. Die Wärmeaustausch-Ventilationsvorrichtung nach Anspruch 4, wobei das Lüftergehäuse (60A) einen kreisförmigen Eingriffsabschnitt (52a) enthält, welcher mit der außengelegenen Saugöffnung (11a) in Eingriff steht, und einen Zuluftkanal von der außengelegenen Saugöffnung (11a) zu der ersten Strömungsführung (40) definiert.

6. Die Wärmeaustausch-Ventilationsvorrichtung nach Anspruch 1, weiter umfassend ein Lüftergehäuse (60B), welches das Abluftgebläse (70) aufnimmt und einen Teil des Abluftkanals definiert.

7. Die Wärmeaustausch-Ventilationsvorrichtung nach Anspruch 1, wobei
die erste Strömungsführung (40) einen Wärmeaustauscher-Eingriffsabschnitt (35a, 35b) enthält, welcher mit dem Wärmeaustauscher (30) entlang einer Längsachse des Wärmeaustauschers in Eingriff steht,
der Wärmeaustauscher (30) einen ersten Eingriffsabschnitt (23a, 23b) enthält, welcher mit dem Wärmeaustauscher-Eingriffsabschnitt (35a, 35b) der ersten Strömungsführung (40) in Eingriff steht, und
der Wärmeaustauscher-Eingriffsabschnitt (35a, 35b) und der erste Eingriffsabschnitt (23a, 23b) lösbar miteinander in Eingriff stehen.

8. Die Wärmeaustausch-Ventilationsvorrichtung nach Anspruch 1, wobei
die zweite Strömungsführung (50) einen Wärmeaustauscher-Eingriffsabschnitt (43a, 43b) enthält, welcher mit dem Wärmeaustauscher (30) entlang einer Längsachse des Wärmeaustauschers (30) in Eingriff steht,
der Wärmeaustauscher (30) einen zweiten Eingriffsabschnitt (23c, 23d) enthält, welcher mit dem Wärmeaustauscher-Eingriffsabschnitt (43a, 43b) der zweiten Strömungsführung (50) in Eingriff steht, und
der Wärmeaustauscher-Eingriffsabschnitt (43a, 43b) und der zweite Eingriffsabschnitt (23c, 23d) lösbar miteinander in Eingriff stehen.

9. Die Wärmeaustausch-Ventilationsvorrichtung nach Anspruch 1, wobei eine Form der ersten Strömungsführung (40) eine invertierte dreieckige Form oder eine invertierte trapezförmige Form ist, wenn sie von einer Endflächenseite in einer Längsrichtung der ersten Strömungsführung (40) betrachtet wird.

10. Die Wärmeaustausch-Ventilationsvorrichtung nach Anspruch 1, weiter umfassend:
einen Nebenluftkanal (110), welcher von Einem des Zuluftkanals und des Abluftkanals abgezweigt ist und den Wärmeaustauscher (30) umläuft; und
eine Klappe (120), welche nahe einer abgezweigten Stelle des Nebenluftkanals (110) angeordnet ist und den Nebenluftkanal (110) öffnet und schließt.

11. Die Wärmeaustausch-Ventilationsvorrichtung nach Anspruch 10, wobei der Nebenluftkanal (70) von dem Abluftkanal abgezweigt ist.

## Revendications

1. Dispositif de ventilation par échange de chaleur dans lequel une soufflerie d'air entrant (70) et une soufflerie d'air sortant (80) sont disposées dans un carter (20) de corps qui a une ouverture d'aspiration (11a) côté extérieur, une ouverture d'alimentation (11b) côté intérieur, une ouverture d'aspiration (13a) côté intérieur et une ouverture d'alimentation (13b) côté extérieur, et un passage d'air entrant qui fournit de l'air prélevé dans l'ouverture d'aspiration (11a) côté extérieur, passant par l'ouverture d'alimentation (11b) côté intérieur et entrant dans une pièce sous l'action de la soufflerie d'air entrant (70) et un passage d'air sortant qui fournit de l'air intérieur prélevé dans l'ouverture d'aspiration (13a) côté intérieur, passant par l'ouverture d'alimentation (13b) côté extérieur et rejeté hors de la pièce par la soufflerie d'air sortant (80) sont formés dans le carter (20) de corps, comportant :
un échangeur de chaleur (30) qui comprend un élément d'échange de chaleur (27) dans lequel un premier passage d'écoulement (FP1) destiné à faire partie du passage d'air entrant et un second passage d'écoulement (FP2) destiné à faire partie du passage d'air sortant sont formés et qui réalise un échange de chaleur entre l'air extérieur et l'air intérieur par l'élément d'échange de chaleur (27) ;
un premier guide d'écoulement (40) qui est monté sur l'échangeur de chaleur (30) et définit un premier moyen d'écoulement de gaz (GF1) qui communique avec l'un quelconque des premier passage d'écoulement (FP1) et second passage d'écoulement (FP2) et n'est inclus que dans l'un quelconque des passage d'air entrant et passage d'air sortant sur un côté extérieur de l'échangeur de chaleur (30) ; et
un second guide d'écoulement (50) qui est monté sur l'échangeur de chaleur (30) et définit un second moyen d'écoulement de gaz (GF2) qui communique avec un passage d'écoulement qui communique avec le premier moyen d'écoulement de gaz (GF1) à la sortie du premier passage d'écoulement (FP1) et du second passage d'écoulement (FP2) et n'est inclus que dans l'un quelconque des passage d'air entrant et passage d'air sortant sur un côté intérieur de l'échangeur de chaleur (30) ; et
l'un quelconque des passage d'air entrant et passage d'air sortant est défini par le premier guide d'écoulement, l'échangeur de chaleur et le second guide d'écoulement ; et
**caractérisé en ce que** :
la section du premier guide d'écoulement (40) du côté de l'échangeur de chaleur (30) est ouverte sur toute la longueur de l'échangeur de chaleur ; et
la section du second guide d'écoulement (50) du côté de l'échangeur de chaleur (30) est ouverte sur toute la longueur de l'échangeur de chaleur.

2. Dispositif de ventilation par échange de chaleur selon la revendication 1, dans lequel
Le premier moyen d'écoulement de gaz (GF1) défini par le premier guide d'écoulement (40) et le second moyen d'écoulement de gaz (GF2) défini par le second guide d'écoulement (50) ne sont inclus chacun que dans le passage d'air sortant, et
le passage d'air entrant et le passage d'air sortant autour de l'échangeur de chaleur (30) sont séparés l'un de l'autre par le premier guide d'écoulement (40) et le second guide d'écoulement (50).

3. Dispositif de ventilation par échange de chaleur selon la revendication 1, dans lequel
le premier moyen d'écoulement de gaz (GF1) défini par le premier guide d'écoulement (40) et le second moyen d'écoulement de gaz (GF2) défini par le second guide d'écoulement (50) ne sont inclus chacun que dans le passage d'air entrant, et
le passage d'air entrant et le passage d'air sortant autour de l'échangeur de chaleur (30) sont séparés l'un de l'autre par le premier guide d'écoulement (40) et le second guide d'écoulement (50).

4. Dispositif de ventilation par échange de chaleur selon la revendication 1, comportant en outre un carter (60A) de ventilateur qui renferme la soufflerie d'air entrant (70) et définit une partie du passage d'air entrant.

5. Dispositif de ventilation par échange de chaleur selon la revendication 4, dans lequel le carter (60A) de ventilateur comprend une partie circulaire d'emboîtement (52a) qui est emboîtée dans l'ouverture d'aspiration (11a) côté extérieur et définit un passage d'air entrant depuis l'ouverture d'aspiration (11a) côté extérieur jusqu'au premier guide d'écoulement (40).

6. Dispositif de ventilation par échange de chaleur selon la revendication 1, comportant en outre un carter (60B) de ventilateur qui renferme la soufflerie d'air sortant et définit une partie du passage d'air sortant.

7. Dispositif de ventilation par échange de chaleur selon la revendication 1, dans lequel
le premier guide d'écoulement (40) comprend un moyen d'emboîtement (35a, 35b) en prise avec l'échangeur de chaleur (30) suivant un axe longitudinal de l'échangeur de chaleur,
l'échangeur de chaleur (30) comprend un premier moyen d'emboîtement (23a, 23b) en prise avec le moyen d'emboîtement (35a, 35b) d'échangeur de chaleur du premier guide d'écoulement (40), et
le moyen d'emboîtement (35a, 35b) d'échangeur de chaleur et le premier moyen d'emboîtement (23a, 23b) sont emboîtés d'une manière séparable l'un dans l'autre.

8. Dispositif de ventilation par échange de chaleur selon la revendication 1, dans lequel
le second guide d'écoulement (50) comprend un moyen d'emboîtement (43a, 43b) en prise avec l'échangeur de chaleur (30) suivant un axe longitudinal de l'échangeur de chaleur (30),
l'échangeur de chaleur (30) comprend un second moyen d'emboîtement (23c, 23d) en prise avec le moyen d'emboîtement (43a, 43b) d'échangeur de chaleur du second guide d'écoulement (50), et
le moyen d'emboîtement (43a, 43b) d'échangeur de chaleur et le premier second d'emboîtement (23c, 23d) sont emboîtés d'une manière séparable l'un dans l'autre.

9. Dispositif de ventilation par échange de chaleur selon la revendication 1, dans lequel une forme du premier guide d'écoulement (40), vue du côté d'une surface extrémité dans une direction longitudinale du premier guide d'écoulement (40), est une forme de triangle inversé ou une forme de trapèze inversé.

10. Dispositif de ventilation par échange de chaleur selon la revendication 1, comportant en outre :
un passage d'air de contournement (110) qui part de l'un quelconque des passage d'air entrant et passage d'air sortant et contourne l'échangeur de chaleur (30) ; et
un registre (120) qui est disposé près d'un point d'où part le passage d'air de contournement (110) et ouvre et ferme le passage d'air de contournement (110).

11. Dispositif de ventilation par échange de chaleur selon la revendication 10, dans lequel le passage d'air de contournement (70) part du passage d'air sortant.
